Europäisches Patentamt

European Patent Office

Office européen des brevets

(19)

(11) EP 1 213 566 A2

(12) **EUROPEAN PATENT APPLICATION**

(43) Date of publication:
    **12.06.2002 Bulletin 2002/24**

(51) Int Cl.[7]: **G01F 1/32**, G01F 1/36

(21) Application number: **01126857.0**

(22) Date of filing: **12.11.2001**

(84) Designated Contracting States:
    **AT BE CH CY DE DK ES FI FR GB GR IE IT LI LU MC NL PT SE TR**
    Designated Extension States:
    **AL LT LV MK RO SI**

(30) Priority: **06.12.2000 DK 200001832**

(71) Applicant: **Haldor Topsoe A/S**
    **2800 Kgs. Lyngby (DK)**

(72) Inventors:
    • **Jensen, Benny Norman**
      **3520 Farum (DK)**
    • **Olsen, Torsten**
      **2730 Herlev (DK)**

(54) **Method for determination of mass flow and density of a process stream**

(57) A method for controlling mass flow of a hydrocarbon feed stream to a steam reformer said stream consisting of hydrogen and of natural gas, naphtha, offgas, LPG, or a mixture hereof, and

molar carbon flow of a hydrocarbon feed stream to a reformer said stream consisting of hydrogen and of natural gas, naphtha, off-gas, LPG, or a mixture hereof, the molar carbon flow being determined as $F_c = C_n \times (V/22.414) \times P \times (273/T)$ $C_n$ being a function of density, and
molar steam carbon ratio in feed stream to a steam reformer, wherein the molar steam and carbon flows are determined as $F_{st} = (V_{st}/22.414) \times P_{st} \times (273/T_{st})$, and $F_c = C_n \times (V/22.414) \times P \times (273/T)$, $C_n$ being a function of density, providing the molar steam carbon ratio $R = F_{st} / F_c$ by online measurement of mass flow and density of a process stream, comprising the steps of

- measurement of said process stream with a conventional differential pressure flow measuring element, providing a signal $S' = k' \times p \times V^2$,

- measurement of same said process stream with a conventional vortex flow measuring element, providing a signal $S'' = k'' \times V$, and

- determination of the mass flow and density of process stream from signals from both said flow measuring elements by the above formulae and $M = p \times V$, as $S' / S'' = k \times \rho \times V = k \times M$ and $S' / (S'')^2 = k \times \rho$.

FIG 3

## Description

## BACKGROUND OF THE INVENTION

### Field of the Invention

The invention relates to measurement and control of mass flow of a process stream, where the chemical composition and thereby density is considerably different from one operation condition to the other and where especially the mass flow has to be maintained constant during variations in the operating conditions.

The invention relates also to online measurement of density of a process stream.

The measurements of the invention create only minor permanent pressure drop.

### Description of Related Art

Determination of mass flow and density can be obtained by different methods known in the art.

One way of determination for a combination of two or more streams is to measure the volumetric flow for each stream by an orifice and determine the molecular weight by analysis of each stream. However, this method is vitiated by some time lag.

Additionally, another way is the flow measurement to determine the specific gravity. This method involves cooling of the process stream so due to condensation this method can not be used for a heavy, hot gas, for instance naphtha at 400°C at elevated pressure.

Curioli flow measurement is a possibility, however, this method can only be used at temperatures below 250°C, and, furthermore, it will give a significant pressure drop leading to increased energy consumption of the process.

Vander Heyden (US Patent No. 5,226,728) discloses a method and apparatus for measuring mass flow involving a number of instrument components and furthermore a sample gas tapped from the pipeline, which is not very simple.

Vander Heyden (US Patent No. 5,357,809) discloses also a volumetric flow corrector having a densitometer, which includes a number of components, piping and instruments for energy flow rate in a sample gas tapped from the pipe line. Mass flow and density determination by this method involves thereby additional equipment.

Louwagie et al. (US Patent No. 5,899,962) disclose a differential pressure measurement utilising dual transmitters, where the mass flow is determined by a sensing electronic housing and a two wire transmitter having an electronic housing including a boss input for receiving a signal representative for a temperature or pressure signal. As it appears, this involves the need of signals for temperature and pressure besides an elaborate differential pressure sensor.

None of the solutions in prior art measure mass flow by simple, conventional flow measure elements and simple conventional computing relays.

## SUMMARY OF THE INVENTION

The invention provides a method for mass flow and density measurement by combining a vortex and a pressure differential device measurement. These measurement methods can directly be used at elevated temperature and pressure.

A vortex measurement will give the actual volume flow, whereas the pressure differential device measurement has to be corrected for the density to give the actual flow. Therefor, by comparing the two measurements the density and/or the mass flow is calculated and indicated and the mass flow signal can be used for subsequent control.

## DETAILED DESCRIPTION OF THE INVENTION

The invention provides a method for mass flow measurement and online density measurement of a process stream, which varies much in composition and molecular weight during operation, and where the operation temperature typically is in the range of 350-400°C.

The measurement is performed by two flow measurements, one using a vortex flow measuring element and the other using a pressure differential measuring element, which typically is a flow orifice, a nozzle or a venturi flow element. All flow elements create low permanent pressure drops. The signal from the vortex flow element is directly related to the volumetric flow. The signal from the pressure differential measuring element is related to the volumetric flow and the density of the process stream. Thereby, by comparing the signals from the two measurements a computing relay finds the actual density and/or mass flow of the process gas stream.

A differential pressure device detects the pressure drop across the installed device, which can be a nozzle, an orifice or a venturi. Thereby, it creates a signal, which is proportional to the density and the actual volumetric flow squared. A vortex flow element creates eddies and measures the hereby created vibrations. The signal is proportional to the actual volumetric flow. This can be expressed as

$$S' = k' \times \rho \times V^2$$

S' is the signal from a pressure differential device,
k' is a constant, $\rho$ is the density of the process stream, and
V is the actual volumetric flow.

If M is the mass flow,

$$M = \rho \times V$$

and the signal can be expressed as

$$S' = k' \times M \times V$$

The signal, S'' from a vortex flow element is:

$$S'' = k'' \times V$$

A computing relay dividing signal S' by signal S'' creates directly a mass flow signal

$$S = \frac{S'}{S''} = \frac{k' \times M \times V}{k'' \times V} = k \times M$$

Alternatively, if the computing relay first squares the signal from the vortex measurement, the density is obtained:

$$S = \frac{S'}{S''^2} = \frac{k' \times \rho \times V^2}{k''^2 \times V^2} = k \times \rho$$

which again directly is related to the molecular weight, a useful parameter in some connections.

By this method, the mass flow and density can be determined at high pressure and temperature even for heavy gasses, which the measuring elements of the invention are suitable for.

The invention is particularly useful for mass flow and density measurement of the hydrocarbon feed flow to a steam reformer, where the hydrocarbon feed flow consists of two or more different process streams, and the combination can vary from one operation situation of the plant to the other.

At a certain reformer capacity the mass flow of hydrocarbon in the reformer feed is to be kept more or less constant, whereas the requirement of actual volumetric flow of a light hydrocarbon and a heavy hydrocarbon are different. This means that the mass flow must be controlled rather than the volumetric flow. At the same time, it is important that the permanent pressure drop of the flow measurements is kept low to keep energy consumption at a minimum.

Feed to a steam reformer is a mixture of steam and hydrocarbon, and the mixture must have a fixed molar ratio between steam and carbon. The molecular weight of a hydrocarbon is a good measure of the amount of carbon and at constant temperature, pressure and compressibility the molecular weight is directly related to the density. Thereby, a density measurement of a hydrocarbon feed stream to a steam reformer is a useful parameter in determining the correct steam flow.

The hydrocarbon feed to a reformer can typically be natural gas, off-gas, LPG, naphtha or mixtures hereof with addition of hydrogen or a hydrogen rich gas.

This means that in a process stream, which consists of a light hydrocarbon and a heavy hydrocarbon, a smaller change in the volumetric flow of the heavy hydrocarbon would also create a smaller change in the total volumetric flow. But this change means a relative large change in the total mass flow, which is important for the operation of the reformer. If this change is a decrement in flow, a volume flow measurement would not detect this as a severe change in hydrocarbon flow, and at unchanged firing of the reformer this could be severely overheated resulting in reduced lifetime of the tubes or even tube ruptures.

By measurement in accordance with the invention a major change in the mass flow of the hydrocarbon feed will be discovered immediately and appropriate actions can be taken in due time to avoid overheating.

Density measurement also detects change in molecular weight immediately and the steam flow can be corrected at once.

### Example 1

In case a process feed is either natural gas or naphtha, the possible feed flows of either natural gas or naphtha could be

|  | Natural Gas | Naphtha |
|---|---|---|
| Volume flow, $Nm^3/h$ | 31,430 | 8,698 |
| Mass flow, kg/h | 22,735 | 21,857 |

From these figures it can be seen that a volumetric flow controller maintaining 31430 $Nm^3/h$ natural gas does not maintain 8698 $Nm^3h$ naphtha, while a mass flow controller maintaining 22735 kg/h will also maintain the naphtha flow.

### Example 2

A feed to a reformer consists of 21468 kg/h heavy naphtha and 389.3 kg/h hydrogen having the molecular weights 109.36 and 2.03, respectively, which is 4400 $Nm^3/h$ naphtha and 4298 $Nm^3/h$ hydrogen.

If the hydrogen flow is increased by 30%, the molecular weight of the process stream is changed from 56.32 to 49.32.

A flow controller receiving the signal from a pressure differential flow element will change the flow to 9295 $Nm^3/h$ corresponding to a signal identical to the original signal, i.e. maintaining $\rho V^2$.

In this way the naphtha mass flow is decreased 7%. A flow controller receiving the signal from a mass flow measurement will maintain the total of 21857.3 kg/h, which now correspond to 21357kg/h naphtha, i.e. a decrease of 0.5% only.

## Example 3

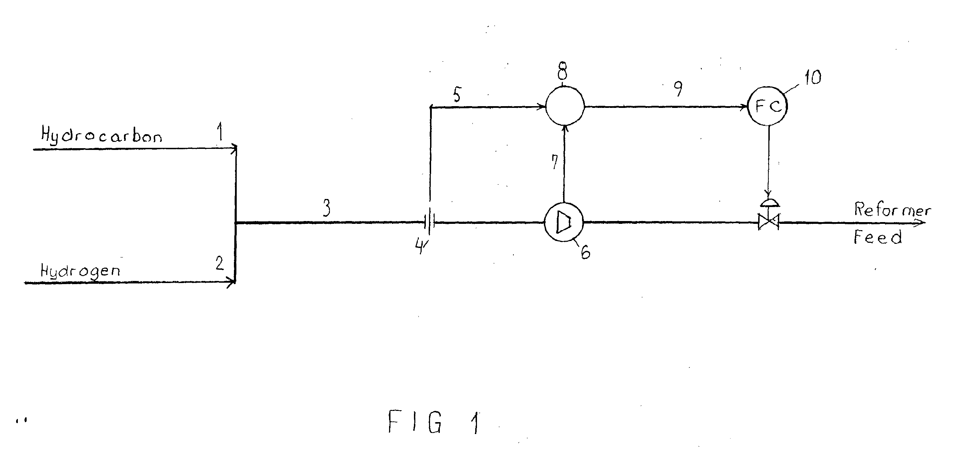

One embodiment of use of the invention is controlling the mass flow to a reformer as shown on Fig 1.

The hydrocarbon feed to a reformer is a mixture of a hydrocarbon 1 and hydrogen 2. Both the compositions of the hydrocarbon and the ratio between hydrocarbon flow and hydrogen flow can be different from one operation situation to another. The combined feed flow 3 is first measured in a flow orifice 4, which creates a signal 5 being proportional to the product of mass flow in kg/h and to actual volumetric flow in $m^3$/h. Further downstream the process stream is passing a vortex flow element 6 and this device creates a signal 7 proportional to the actual volumetric flow in $m^3$/h. Signal 5 and 6 enter a computing relay 8, which divides signal 5 by signal 7 resulting in signal 9 being the mass flow in kg/h. Signal 9 is used in flow controller 10 controlling the position of the flow valve.

## Example 4

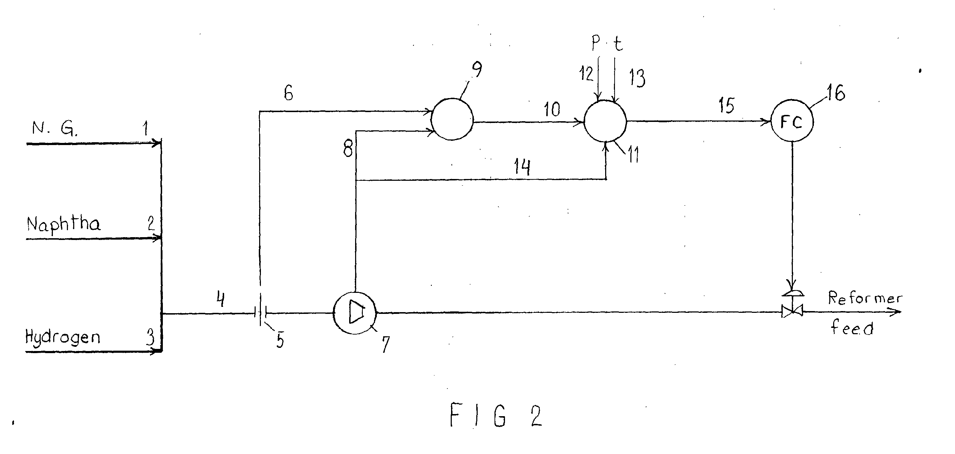

One embodiment of use of the invention is controlling the molar carbon flow to a reformer as shown on Fig 2.

A reformer feed can consist of a mixture of natural gas 1 naphtha 2 and hydrogen 3. The combined feed stream 4 is first flowing through an orifice 5 creating a signal 6 proportional to the product of density and actual volumetric flow squared. Further downstream the process gas is sent through a vortex flow element 7 creating a signal 8 proportional to the actual volumetric flow. The computing relay 9 divides signal 6 by signal 8 squared, this giving a new signal 10, which is proportional to the density of the process stream. This signal 10 is sent to a second computing relay 11. When the composition of the feed streams and mixtures hereof are known, it is possible to derive a relation between the carbon number and density. This relation between density and carbon number together with adjustable input parameters for pressure and temperature and the signal 14 for actual volumetric flow make relay 11 able to compute the molar flow of carbon to the reformer, signal 15. Signal 15 is used in flow controller 16 maintaining the molar carbon feed to reformer.

If T is the absolute temperature in °K, P is absolute pressure in atmospheres, V is the actual volumetric flow in $m^3$/h, $C_n$ is the carbon number, kmole carbon/ kmole hydrocarbon feed and $F_c$ is carbon flow, kmole C/h, then the relations used in the computing relay can be expressed as
Feed flow

$$F = V \times P \times \frac{273}{T} \text{ Nm}^3/\text{h}$$

Carbon flow

$$F_c = C_n \times \frac{F}{22.414} \text{ kmole C/h}$$

$C_n$ being a function of density.

When ideal gas is assumed.

## Example 5

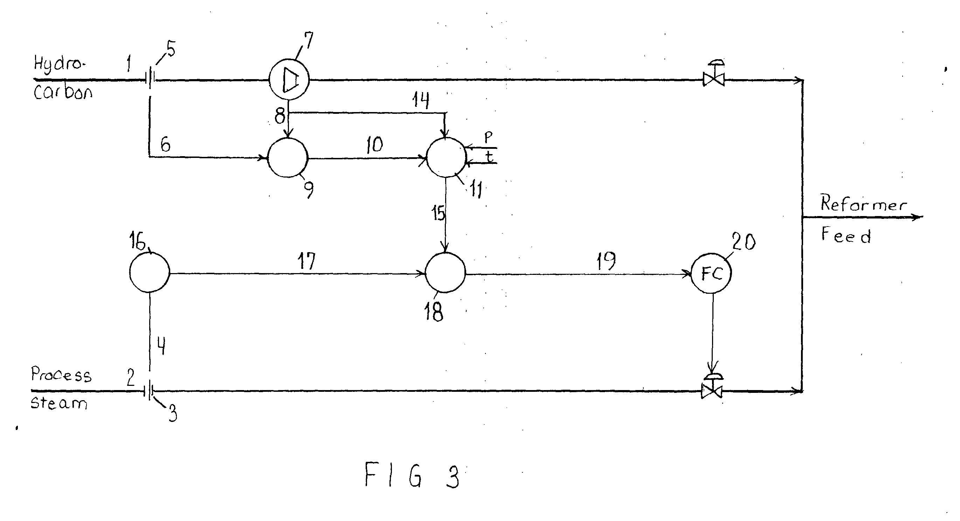

One embodiment of use of the invention is controlling the molar steam/carbon ratio to a steam reformer as shown on Fig. 3.

A reformer hydrocarbon feed 1 is first flowing through an orifice 5 creating a signal 6 proportional to the product of density and actual volumetric flow squared. Further downstream the process gas is sent through a vortex flow element 7 creating a signal 8 proportional to the actual volumetric flow. The computing relay 9 divides signal 6 by signal 8 squared, this giving a new signal 10, which is proportional to the density of the process stream. This signal 10 is sent to a second computing relay 11, where a relation between density and carbon number is built in. This together with input parameters for pressure and temperature and the signal 14 for actual volumetric flow make relay 11 able to compute the molar flow of carbon to the reformer, signal 15.

A reformer steam feed 2 are flowing through an orifice 3 creating a signal 4 proportional to the product of density and actual volumetric flow squared. Signal 4 is sent to flow controller 16, which, as the molecular weight, pressure and temperature are known and constant send a signal, 17 for flow expressed as kmole/h to computing relay 18. Computing relay 18 also receives signal 15, kmole hydrocarbon feed/h and creates the steam carbon ratio and sends this signal 19 to flow controller 20, which controls the steam/carbon ratio to the reformer by controlling the steam flow.

If T is the absolute temperature in °K, P is absolute pressure in atmospheres, V is the actual volumetric flow in $m^3$/h, $C_n$ is the carbon number, kmole carbon/ kmole hydrocarbon feed and $F_c$ is carbon flow, kmole C/h, then the relations used in the computing relay can be expressed as
Carbon flow

$$F_c = C_n \text{ x } (V/22.414) \text{ x } P \text{ x } (273/T)$$

for an ideal gas.

$C_n$ being a function of density.

The molar flow for steam can be expressed as

$$F_{st} = (V_{st} / 22.414) \text{ x } P_{st} \text{ x } (273/T_{st})$$

where
$V_{st}$ is the actual volumetric steam flow found from the orifice measurement and $P_{st}$, $T_{st}$ are the steam conditions, which are known and constant.

The steam carbon ratio is

$$R = F_{st} / F_c.$$

## Claims

1. A method for controlling mass flow of a hydrocarbon feed stream to a steam reformer said stream consisting of hydrogen and of natural gas, naphtha, off-gas, LPG, or a mixture hereof, and
molar carbon flow of a hydrocarbon feed stream to a reformer said stream consisting of hydrogen and of natural gas, naphtha, off-gas, LPG, or a mixture hereof, the molar carbon flow being determined as $F_c = C_n \times (V/22.414) \times P \times (273/T)$ $C_n$ being a function of density, and
molar steam carbon ratio in feed stream to a steam reformer, wherein the molar steam and carbon flows are determined as $F_{st} = (V_{st}/22.414) \times P_{st} \times (273/T_{st})$, and $F_c = C_n \times (V/22.414) \times P \times (273/T)$, $C_n$ being a function of density, providing the molar steam carbon ratio $R = F_{st} / F_c$ by online measurement of mass flow and density of a process stream, comprising the steps of

   - measurement of said process stream with a conventional differential pressure flow measuring element, providing a signal $S' = k' \times \rho \times V^2$,

   - measurement of same said process stream with a conventional vortex flow measuring element, providing a signal $S'' = k'' \times V$, and

   - determination of the mass flow and density of process stream from signals from both said flow measuring elements by the above formulae and $M = \rho \times V$, as $S' / S'' = k \times \rho \times V = k \times M$ and $S' / (S'')^2 = k \times \rho$.

FIG 1

Hydrocarbon 1

Hydrogen 2

3

4

5

8

7

6

9

FC 10

Reformer
Feed

EP 1 213 566 A2

EP 1 213 566 A2

N. G. 1

Naphtha 2

Hydrogen 3

4

5

6

7

8

9

10

P · t

12 13

11

14

15

FC 16

Reformer feed

FIG 2

Reformer Feed

Hydro-Carbon

Process Steam

FIG 3